# EUROPEAN PATENT SPECIFICATION

(11) **EP 3 038 392 B1**
(45) Date of publication and mention of the grant of the patent: **14.08.2019**
(21) Application number: 14838047.0
(22) Date of filing: 25.04.2014
(51) Int. Cl.: H04W 8/08, H04L 29/12, H04W 84/12

(54) **NETWORK ADDRESS PROCESSING METHOD, DEVICE AND SYSTEM**
NETZWERKADRESSENVERARBEITUNGSVERFAHREN, VORRICHTUNG UND SYSTEM
PROCÉDÉ DE TRAITEMENT D'ADRESSE RÉSEAU, DISPOSITIF ET SYSTÈME

(30) Priority: 22.08.2013 CN 201310371342
(43) Date of publication of application: 29.06.2016
(73) Proprietor: ZTE Corporation, Guangdong Province 518057 (CN)
(72) Inventor: YAN, Wei, Shenzhen Guangdong Province 518057 (CN); ZHOU, Na, Shenzhen Guangdong Province 518057 (CN); HUO, Yuzhen, Shenzhen Guangdong Province 518057 (CN); LEI, Xiaoyan, Shenzhen Guangdong Province 518057 (CN)
(74) Representative: Novagraaf Technologies
(86) International application number: PCT/CN2014/076264
(87) International publication number: WO 2015/024394

(56) References cited:
- WO-A1-2012/146291
- CN-A- 101 127 698
- CN-A- 103 188 657
- CN-A- 103 220 817
- "3rd Generation Partnership Project; Technical Specification Group Services and System Aspects; Study on S2a Mobility based On GTP & WLAN access to EPC (SaMOG); Stage 2 (Release 12)", 3GPP STANDARD; 3GPP TR 23.852, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 20 July 2012 (2012-07-20), pages 1-63, XP050648987, [retrieved on 2012-07-20]
- "3rd Generation Partnership Project; Technical Specification Group Services and System Aspects; Architecture enhancements for non-3GPP accesses (Release 12)", 3GPP DRAFT; 23402-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725530, Retrieved from the Internet: URL:http://www.3gpp.org/ftp/tsg_sa/WG2_Arc h/Latest_SA2_Specs/Rel-12/ [retrieved on 2013-07-23]

## Description

### Technical Field

The present invention relates to the field of communications, and in particular to a method, device, system for processing a network address, WLAN and UE.

### Background

The Evolved Packet System (EPS) of the 3rd Generation Partnership Project (3GPP) is composed of an Evolved Universal Terrestrial Radio Access Network (E-UTRAN), a Mobility Management Entity (MME), a Serving Gateway (S-GW), a Packet Data Network Gateway (P-GW), and a Home Subscriber Server (HSS).

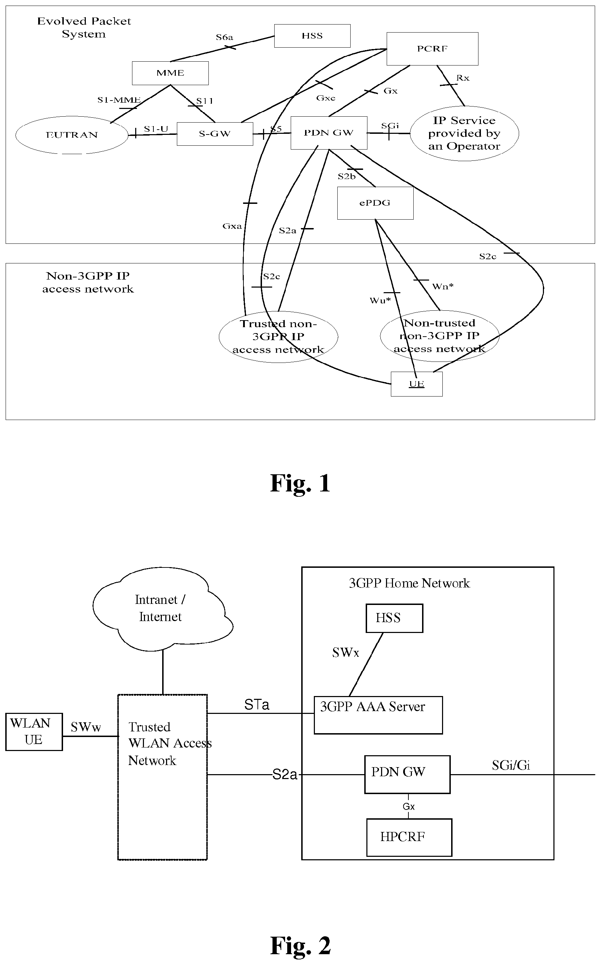

As shown in Fig. 1, the EPS supports interworking with a non-3GPP system, wherein the interworking with the non-3GPP system is implemented via an S2a/b/c interface, and the PDN-GW serves as an anchor between the 3GPP system and the non-3GPP system. In the system architecture diagram of the EPS, the non-3GPP system access is divided into an untrusted non-3GPP access and a trusted non-3GPP access, wherein the untrusted non-3GPP access needs to be connected with the PDN-GW via an Evolved Packet Data Gateway (ePDG), the interface between the ePDG and the PDN GW being an S2b; and the trusted non-3GPP access can be directly connected to the PDN-GW via the S2a interface, the S2a interface performing information interaction using a PMIP protocol. In addition, the S2c interface provides user plane-related control and mobility support between a User Equipment (UE) and a PDN GW, and a mobility management protocol that the S2c interface supports is Mobile IPv6 Support for Dual Stack Hosts and Routers (DSMIPv6) which can be used for the untrusted non-3GPP access and the trusted non-3GPP access.

The Wireless Local Area Network (WLAN) can serve as a special non-3GPP system access Evolved Packet Core (EPC), and the convergence of the two networks also brings many interconnection and intercommunication problems.

In addition to accessing an EPC using the above-mentioned S2a/b/c interface, the WLAN UE can also be directly connected to the Internet via a trusted WLAN network access. As shown in Fig. 2, the WLAN UE can be connected to the 3GPP EPC via the trusted WLAN access network, and an IP address is allocated by the 3GPP EPC for the WLAN UE, and in this scenario, the UE can support seamless WLAN offload; and on the other hand, the WLAN UE can also directly access the Internet, and an IP address is allocated for the WLAN UE by the trusted WLAN access network, and in this scenario, the UE supports non-seamless WLAN offload.

When the WLAN UE directly accesses the Internet via a trusted WLAN, the UE supports the non-seamless WLAN offload, routes a specific IP flow via the WLAN access instead of an EPC. A policy for identifying these IP flows may be pre-configured to the UE by an operator or dynamically set via an Access Network Discovery and Selection Function (ANDSF) or be set according to a user's priority. For such an IP flow, the UE uses a local IP address allocated by the WLAN access network, and the network does not provide the reservation of the IP address between the 3GPP and the WLAN, and the UE needs to obtain one local IP address on the WLAN access.

When the WLAN UE accesses an EPC via an S2a interface, the network may provide the reservation of the IP address between the 3GPP and the WLAN, and the network allocates the same IP address for the UE between the 3GPP and the WLAN, so that the UE supports seamless WLAN offload and executes the seamless WLAN offload for some IP flows. Meanwhile, if the UE also directly access the Internet via the WLAN access network, then the UE may also execute non-seamless WLAN offload for some other flows.

At present, there are many researches on the flow and policy intercommunication of an S2b and an S2c interface, while there is few research on an S2a interface. The Study on S2a Mobility based On GTP & WLAN access to EPC (SaMOG) subject mainly studies an interconnection and intercommunication problem of a UE accessing an EPC via an S2a interface with a WLAN serving as a trusted non-3GPP IP access network (TNAN).

The research schemes of the SaMOG subject are mainly divided into schemes in which the UE is effected and schemes in which the UE is not effected. The so-called schemes in which the UE is effected refer to the UE not supporting to transfer Access Point Name (APN) information and extra Packet Data Network (PDN) connection and a handover flow between access systems, etc., and these UE correspond to the UE in Release 11 (R11) in the 3GPP standard, which is referred to as R11 UE for short hereinafter; while the schemes in which the UE is not affected refer to the UE supporting the APN information and extra PDN connections and handover flows between systems, and these UE correspond to the UE in Release 12 (R12) in the 3GPP standard, which is referred to as R12 UE for short hereinafter;

For an R11 UE, when the UE accesses a network, the network decides and allows the UE to access in only one way, that is, non-seamless WLAN offload, which is also referred to as service offload, or accesses the EPC via the S2a.

For an R12 UE, the UE is capable of supporting the non-seamless WLAN offload and the access to the EPC via the S2a interface, and also supports an extra PDN connection and handover flows; moreover, the R12 UE may access a non-3GPP access network which only supports the R11 UE, and may also access the non-3GPP access network which supports the R12 UE.

In order to facilitate the R12 UE to select an access mode, i.e. service offload, or accessing an EPC via an S2a, or accessing in the two ways at the same time, and in an S2a connection scheme of the R12 UE of the SaMOG, the following features should be supported:
1) optionally, the network shows the capability thereof to the UE, such as supporting handover, supporting the access of non-default APN, supporting non-seamless WLAN offload, supporting EPC-routed traffic, supporting connections to a plurality of PDNs, etc; and
2) the UE should also show in the authentication process whether it supports EPC access and/or non-seamless WLAN offload.

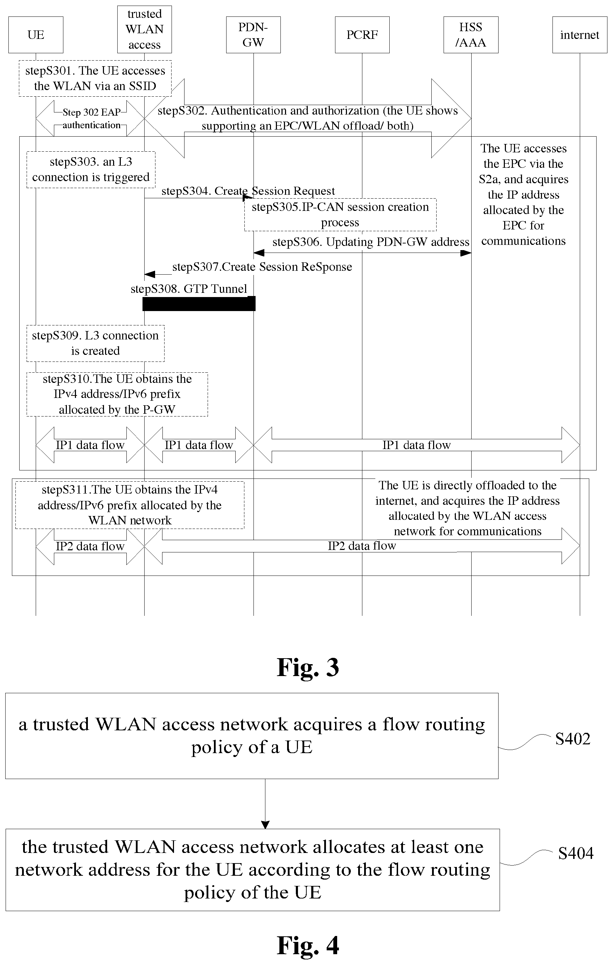

If a trusted WLAN access network deploys different Services Set Identifiers (SSID) for EPC-routed traffic and non-seamless WLAN offload, then the R12 UE can respectively access the Internet and the 3GPP EPC via two different SSIDs. The R12 UE respectively obtains, from the trusted WLAN access network and the 3GPP EPC, two different IP addresses for sending messages on different paths. The process of the R12 UE selecting the service shunting and/or accessing the EPC via the S2a is as shown in Fig. 3.

A precondition for this scheme is that, after the WLAN access network supports the UE to be connected to one SSID, the UE is not only able to be connected to the EPC via the S2a but also able to offload services to the Internet using the SSID. The specific flow of Fig. 3 is as follows:
Step S301, a UE is connected to a trusted WLAN access network via an SSID.
Step S302, the UE completes an access authentication and authorization progress, and shows the EPC that whether it supports EPC access and/or non-seamless WLAN offload.
Step S303, the trusted WLAN access network decides whether to create an S2a connection by means of an HSS/AAA instruction or pre-configuration information.

If an S2a connection needs to be created, then a layer-3 message of the UE will trigger a connection process of accessing the EPC via an S2a interface (in addition to layer-3 message triggering, the process of accessing the EPC by the S2a can also be triggered utilizing an Extensible Authentication Protocol (EAP) and AAA signalling which are used in step S302).

Steps S304-S308 describe the connection process of accessing the EPC via the S2a interface:
Step S304, a Create Session Request is sent.
Step S305, an IP-CAN session creation process.
Step S306, a PDN-GW address is updated.
Step S307, a Create Session Response is returned. The PDN GW returns, in a Create Session Response message, an IP address/prefix allocated to the UE to the trusted WLAN access network.
Step S308, a GTP (GPRS Tunnelling Protocol) tunnel is created.
Step S309, an L3 connection is completed.
Step S310, the UE obtains an Internet Protocol version 4 (IPv4) address and/or an IPv6 prefix or IPv6 address allocated by the PDN GW for the UE. The UE uses the IP address allocated by the PDN GW for data communication, and step S311 is no longer executed.

If service offload needs to be performed for the UE, then steps S304-S310 are skipped and step S311 is executed.

Step S311, the trusted WLAN access network does not initiate an S2a connection to the EPC, but directly allocate, for the UE, an IPv4 address and/or an IPv6 prefix or IPv6 address. The UE uses the IP address allocated by the trusted WLAN access network for service offload.

If an S2a connection and service shunting need to be created for the UE at the same time, then the above-mentioned steps S304-311 are executed. The UE can use the IP address allocated by the PDN GW and the IP address allocated by the trusted WLAN access network at the same time respectively for the EPC connection and service shunting.

From the above-mentioned flow, it can be seen that the following problems exist in the scheme:
1) The UE needs to support the following capability: in the authentication process, showing the EPC whether it supports EPC access and/or non-seamless WLAN offload. However, in accordance with the description in TR23.852, UE before the R12 does not support such a function, and cannot achieve forward compatibility.
2) If the UE is connected the EPC and offloads services to the Internet, then as shown in the above-mentioned steps S310 and S311, the UE needs to respectively acquire IP addresses through two address allocation processes, which renders that an address allocation time of the UE is too long and the user experience is effected.

Aiming at the problem in the related art that a UE is not forward compatible during an authentication process, no effective solution has been presented at present.

The related document WO 2012/146291 A1 provides a method of enabling a UE to access a local PDN when the UE accesses an EPC network via a Broadband Forum, BBF-defined access network over the S2a interface; the related document "3GPP STANDARD 3GPP TR 23.852, no. VI.2.0" provides the Study item which is to study: the addition of a S2a based on GTP option, and supporting WLAN access to EPC through S2a via mechanisms with no impact to the UE or with impact to the UE. However, the above mentioned problem still remains unsolved by the above mentioned documents.

### Summary

The present invention includes a method for processing a network address according to claim 1, a method for processing a network address according to claim 4, a device for processing a network address according to claim 8, a device for processing a network address according to claim 10, and a system according to claim 13. Advantageous embodiments are defined by the dependent claims.

An embodiment of the present invention provides a method for accessing a network address, device, system, a WLAN and a UE, so as to at least solve the above-mentioned problem.

According to one aspect of the embodiments of the present invention, a method for accessing a network address is provided, comprising: acquiring, by a trusted WLAN access network, a flow routing policy of a UE; and allocating, by the trusted WLAN access network, at least one network address for the UE according to the flow routing policy of the UE.

Preferably, the flow routing policy of the UE comprises at least one of the following: a data service of the UE can only make an access via an evolved packet core (EPC); the data service of the UE can only be offloaded via the trusted WLAN access network; and the data service of the UE makes an access via the EPC and offloaded via the trusted WLAN access network.

Preferably, allocating, by the trusted WLAN access network, the at least one network address for the UE according to the flow routing policy of the UE comprises at least one of the following: in the case where the flow routing policy of the UE is that the data service of the UE can only make an access via the EPC, allocating, by the trusted WLAN access network, an IP address and/or IP address prefix from the EPC for the UE; in the case where the flow routing policy of the UE is that the data service of the UE can only be offloaded via the trusted WLAN access network, allocating, by the trusted WLAN access network, a local IP address and/or IP address prefix of the trusted WLAN access network for the UE; in the case where the flow routing policy of the UE is that the data service of the UE makes an access via the EPC and offloaded via the trusted WLAN access network, allocating, by the trusted WLAN access network, the IP address and/or IP address prefix from the EPC as well as the local IP address and/or IP address prefix of the trusted WLAN access network for the UE; and in the case where the flow routing policy of the UE is empty, allocating, by the trusted WLAN access network, the at least one network address for the UE according to the flow routing policy of the UE comprises: allocating, by the trusted WLAN access network, the IP address and/or IP address prefix from the EPC as well as the local IP address and/or IP address prefix of the trusted WLAN access network for the UE.

According to one aspect of the embodiments of the present invention, a method for accessing a network address is provided, comprising: receiving, by a UE, at least one network address allocated by a trusted WLAN access network for the UE according to the flow routing policy of the UE; and accessing, by the UE, a corresponding network according to the at least one network address.

Preferably, the flow routing policy of the UE comprises at least one of the following: a data service of the UE can only make an access via an evolved packet core (EPC); the data service of the UE can only be offloaded via the trusted WLAN access network; and the data service of the UE makes an access via the EPC and offloaded via the trusted WLAN access network.

Preferably, receiving, by the UE, the at least one network address allocated by the trusted WLAN access network for the UE according to the flow routing policy of the UE comprises: in the case where the flow routing policy of the UE is that the data service of the UE can only make an access via the EPC, receiving, by the UE, an IP address and/or IP address prefix from the EPC which is allocated by the trusted WLAN access network for the UE; in the case where the flow routing policy of the UE is that the data service of the UE can only be offloaded via the trusted WLAN access network, receiving, by the UE, a local IP address and/or IP address prefix of the trusted WLAN access network allocated by the trusted WLAN access network for the UE; in the case where the flow routing policy of the UE is that the data service of the UE makes an access via the EPC and offloaded via the trusted WLAN access network, receiving, by the UE, the IP address and/or IP address prefix from the EPC and the local IP address and/or IP address prefix of the trusted WLAN access network which are allocated by the trusted WLAN access network for the UE; and in the case where the flow routing policy of the UE is empty, receiving, by the UE, the IP address and/or IP address prefix from the EPC and the local IP address and/or IP address prefix of the trusted WLAN access network which are allocated by the trusted WLAN access network for the UE.

Preferably, in the case where the flow routing policy of the UE is that the data service of the UE makes an access via the EPC and offloaded via the trusted WLAN access network, or in the case where the flow routing policy of the UE is empty, accessing, by the UE, the corresponding network according to the at least one network address comprises: sending, by the UE, an address type request to an access network discovery and selection function (ANDSF), wherein the address type request carries the at least one network address; receiving, by the UE, an address type as a response of the ANDSF to the address type request, wherein the address type represents that the at least one network address is allocated by the trusted WLAN access network and/or allocated by the EPC; and selecting, by the UE, a corresponding network address for a data service of the UE according to the address type, and accessing the corresponding network according to the selected network address.

According to another aspect of the embodiments of the present invention, a device for accessing a network address is provided, comprising: an acquisition component configured to acquire a flow routing policy of a user equipment (UE); and an allocation component configured to allocate at least one network address for the UE according to the flow routing policy of the UE.

Preferably, the allocation component is further configured to be one of the following: in the case where the flow routing policy of the UE is that a data service of the UE can only make an access via the EPC, the allocation component is configured to allocate an IP address and/or IP address prefix from the EPC for the UE; in the case where the flow routing policy of the UE is that the data service of the UE can only be offloaded via the trusted WLAN access network, the allocation component is configured to allocate a local IP address and/or IP address prefix of the trusted WLAN access network for the UE; in the case where the flow routing policy of the UE is that the data service of the UE makes an access via the EPC and offloaded via the trusted WLAN access network, the allocation component is configured to allocate the IP address and/or IP address prefix from the EPC as well as the local IP address and/or IP address prefix of the trusted WLAN access network for the UE; and in the case where the flow routing policy of the UE is empty, the allocation component is configured to allocate the IP address and/or IP address prefix from the EPC and the local IP address and/or IP address prefix of the trusted WLAN access network which are allocated for the UE.

According to another aspect of the embodiments of the present invention, a device for accessing a network address is provided, comprising: a receiving component configured to receive at least one network address allocated by a trusted wireless local area network (WLAN) access network for the UE according to a flow routing policy of the UE; and an access component configured to access a corresponding network according to the at least one network address.

Preferably, the receiving component is further configured to be one of the following: in the case where the flow routing policy of the UE is that a data service of the UE can only make an access via the EPC, the receiving component is configured to receive an IP address and/or IP address prefix from the EPC which is allocated by the trusted WLAN access network for the UE; in the case where the flow routing policy of the UE is that the data service of the UE can only be offloaded via the trusted WLAN access network, the receiving component is configured to receive a local IP address and/or IP address prefix of the trusted WLAN access network allocated by the trusted WLAN access network for the UE; in the case where the flow routing policy of the UE is that the data service of the UE makes an access via the EPC and offloaded via the trusted WLAN access network, the receiving component is configured to receive the IP address and/or IP address prefix from the EPC and the local IP address and/or IP address prefix of the trusted WLAN access network which are allocated by the trusted WLAN access network for the UE; and in the case where the flow routing policy of the UE is empty, the receiving component is configured to receive the IP address and/or IP address prefix from the EPC and the local IP address and/or IP address prefix of the trusted WLAN access network which are allocated by the trusted WLAN access network for the UE.

Preferably, in the case where the flow routing policy of the UE is that the data service of the UE makes an access via the EPC and offloaded via the trusted WLAN access network, or in the case where the flow routing policy of the UE is empty, the device further comprises a sending component configured to send an address type request to an access network discovery and selection function (ANDSF), wherein the address type request carries the at least one network address; the receiving component is further configured to receive an address type as a response of the ANDSF to the address type request, wherein the address type represents that the at least one network address is allocated by the trusted WLAN access network and/or allocated by the EPC; and the access component is further configured to select a corresponding network address for the data service of the UE according to the address type, and access the corresponding network according to the selected network address.

According to still another aspect of the embodiments of the present invention, a WLAN is provided, comprising the device as claimed in the above-mentioned item eight or item nine.

According to still another aspect of the embodiments of the present invention, a UE is provided, comprising the device as claimed in any one of the above-mentioned item ten and item twelve.

According to still another aspect of the embodiments of the present invention, a system for accessing a network address is provided, comprising the WLAN and the UE.

Preferably, the system further comprises an ADNSF configured to respond to an address type request of the UE and generate an address type and send the address type to the UE.

Through the embodiments of the present invention, a trusted WLAN access network acquires a flow routing policy of a UE, and the trusted WLAN access network allocates at least one network address for the UE according to the flow routing policy of the UE, so that the problem of a UE being not forward compatible during an authentication process is solved, thereby achieving a beneficial effect of improving the compatibility of the UE.

### Brief description of the drawings

Drawings, provided for further understanding of the present invention and forming a part of the specification, are used to explain the present invention together with embodiments of the present invention rather than to limit the present invention. In the accompanying drawings:
Fig. 1 is a network topological graph of a UE accessing an EPC via a non-3GPP access network according to the related art;
Fig. 2 is an operation reference model graph of a trusted WLAN access network according to the related art;
Fig. 3 is a schematic flowchart of a method for accessing a network address in the related art;
Fig. 4 is a flowchart of a method I for accessing a network address according to an embodiment of the present invention;
Fig. 5 is a flowchart of a method II for accessing a network address two according to an embodiment of the present invention;
Fig. 6 is a schematic structure diagram of a device I for accessing a network address according to an embodiment of the present invention;
Fig. 7 is a schematic structure diagram of a device II for accessing a network address according to an embodiment of the present invention;
Fig. 8 is another schematic structure diagram of a device II for accessing a network address according to an embodiment of the present invention;
Fig. 9 is a flowchart of a method for accessing a network address by which a UE accesses an EPC and a trusted WLAN access network at the same time according to a preferred embodiment of the present invention;
Fig. 9a is a flowchart of acquiring an address type provided by an embodiment of the present invention;
Fig. 10 is a flowchart of a method for accessing a network address in which a UE can only make an access via a trusted WLAN access network according to a preferred embodiment of the present invention;
Fig. 11 is a flowchart of a method for accessing a network address in which a UE can only make an access via an EPC according to a preferred embodiment of the present invention;
Fig. 12 is a flowchart of a method for accessing a network address in the case where no flow routing policy of the UE is acquired according to a preferred example of the present invention; and
Fig. 13 is a flowchart of a method for a UE to acquire an address type in a heterogeneous converged network of cellular and WLAN according to an embodiment of the present invention.

### Detailed description of the embodiments

The present invention is described below in detail by reference to the accompanying drawings in conjunction with embodiments. Note that, the embodiments of the present invention and the features of the embodiments can be combined with each other if there is no conflict.

An embodiment of the present invention provides a method for accessing a network address. Fig. 4 is a flow chart of a method I for accessing a network address according to an embodiment of the present invention. As shown in Fig. 4, the method comprises the following steps:
Step S402, a trusted WLAN access network acquires a flow routing policy of a UE.

Step S404, the trusted WLAN access network allocates at least one network address for the UE according to the flow routing policy of the UE.

Through the above-mentioned steps, the problem of a UE being not forward compatible during an authentication process is solved, thereby achieving a beneficial effect of improving the compatibility of the UE.

In another preferred embodiment of the present invention, the flow routing policy of the UE may comprise at least one of the following: a data service of the UE can only make an access via an EPC; the data service of the UE can only be offloaded via the trusted WLAN access network; and the data service of the UE makes an access via the EPC and is offloaded via the trusted WLAN access network. By establishing the flow routing policy of the UE, whether the access is made via the EPC access or via the trusted WLAN access network, or the access is made via the EPC and the trusted WLAN access network can be distinguished,

In another preferred embodiment of the present invention, allocating, by the trusted WLAN access network, the at least one network address for the UE according to the flow routing policy of the UE may further comprise at least one of the following: in the case where the flow routing policy of the UE is that the data service of the UE can only make an access via the EPC, allocating, by the trusted WLAN access network, an IP address and/or IP address prefix from the EPC for the UE; in the case where the flow routing policy of the UE is that the data service of the UE can only be offloaded via the trusted WLAN access network, allocating, by the trusted WLAN access network, a local IP address and/or IP address prefix of the trusted WLAN access network for the UE; in the case where the flow routing policy of the UE is that the data service of the UE makes an access via the EPC and is offloaded via the trusted WLAN access network, allocating, by the trusted WLAN access network, the IP address and/or IP address prefix from the EPC as well as the local IP address and/or IP address prefix of the trusted WLAN access network for the UE; and in the case where the flow routing policy of the UE is empty, allocating, by the trusted WLAN access network, the at least one network address for the UE according to the flow routing policy of the UE comprises: allocating, by the trusted WLAN access network, the IP address and/or IP address prefix from the EPC as well as the local IP address and/or IP address prefix of the trusted WLAN access network for the UE. Through the above-mentioned steps, different IP addresses and/or IP address prefixes can be allocated for the UE according to different flow routing policies of the UE, so that the problem in the related art that the UE is not forward compatible.

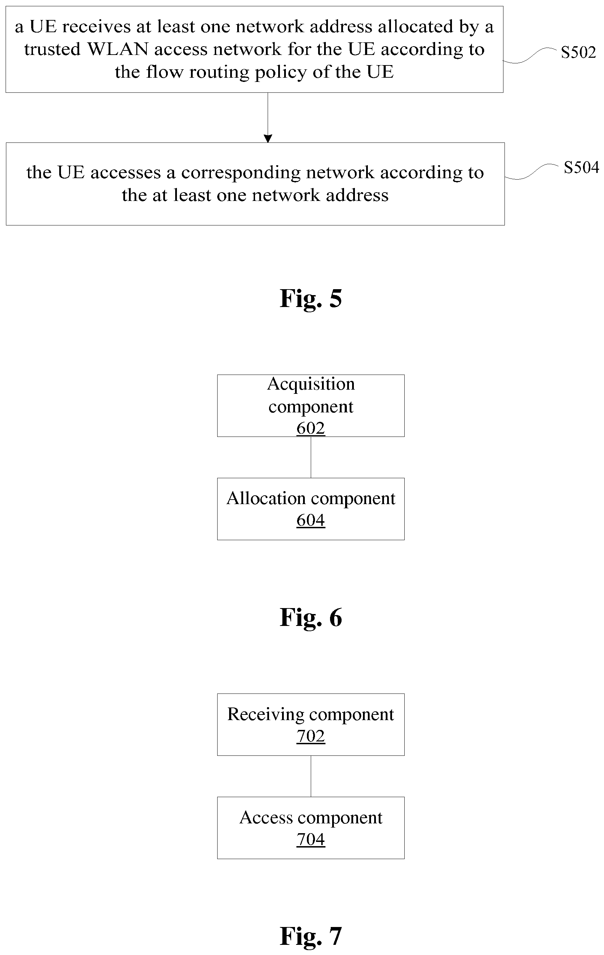

An embodiment of the present invention further provides another method for accessing a network address. Fig. 5 is a flow chart of a method II for accessing a network address according to an embodiment of the present invention. As shown in Fig. 5, the method comprises the follows steps:
Step S502, a UE receives at least one network address allocated by a trusted WLAN access network for the UE according to the flow routing policy of the UE.
Step S504, the UE accesses a corresponding network according to the at least one network address.

In another embodiment of the present invention, the flow routing policy of the UE may comprise at least one of the following: a data service of the UE can only make an access via an EPC; the data service of the UE can only be offloaded via the trusted WLAN access network; and the data service of the UE makes an access via the EPC and is offloaded via the trusted WLAN access network.

In another embodiment of the present invention, receiving, by the UE, the at least one network address allocated by the trusted WLAN access network for the UE according to the flow routing policy of the UE may further comprise: in the case where the flow routing policy of the UE is that the data service of the UE can only make the access via the EPC, receiving, by the UE, an IP address and/or IP address prefix from the EPC which are/is allocated by the trusted WLAN access network for the UE; in the case where the flow routing policy of the UE is that the data service of the UE can only be offloaded via the trusted WLAN access network, receiving, by the UE, a local IP address and/or IP address prefix of the trusted WLAN access network allocated by the trusted WLAN access network for the UE; in the case where the flow routing policy of the UE is that the data service of the UE makes the access via the EPC and is offloaded via the trusted WLAN access network, receiving, by the UE, the IP address and/or IP address prefix from the EPC and the local IP address and/or IP address prefix of the trusted WLAN access network which are allocated by the trusted WLAN access network for the UE; and in the case where the flow routing policy of the UE is empty, receiving, by the UE, the IP address and/or IP address prefix from the EPC and the local IP address and/or IP address prefix of the trusted WLAN access network which are allocated by the trusted WLAN access network for the UE.

In another embodiment of the present invention, in the case where the flow routing policy of the UE is that the data service of the UE makes the access via the EPC and is offloaded via the trusted WLAN access network, or in the case where the flow routing policy of the UE is empty, accessing, by the UE, the corresponding network according to the at least one network address comprises: sending, by the UE, an address type request to an ANDSF, wherein the address type request carries the at least one network address; receiving, by the UE, an address type as a response of the ANDSF to the address type request, wherein the address type represents that the at least one network address is allocated by the trusted WLAN access network and/or allocated by the EPC; and selecting, by the UE, a corresponding network address for a data service of the UE according to the address type, and accessing the corresponding network according to the selected network address.

An embodiment of the present invention further provides a device for accessing a network address. Fig. 6 is a schematic structure diagram of a device I for accessing a network address according to an embodiment of the present invention. As shown in Fig. 6, the device comprises:
an acquisition component 602 configured to acquire a flow routing policy of a UE; and
an allocation component 604 configured to allocate at least one network address for the UE according to the flow routing policy of the UE.

In another embodiment of the present invention, the allocation component 604 can further be configured to be at least one of the following: in the case where the flow routing policy of the UE is that a data service of the UE can only make an access via the EPC, the allocation component is configured to allocate an IP address and/or IP address prefix from the EPC for the UE; in the case where the flow routing policy of the UE is that the data service of the UE can only be offloaded via the trusted WLAN access network, the allocation component is configured to allocate a local IP address and/or IP address prefix of the trusted WLAN access network for the UE; in the case where the flow routing policy of the UE is that the data service of the UE makes an access via the EPC and is offloaded via the trusted WLAN access network, the allocation component is configured to allocate the IP address and/or IP address prefix from the EPC as well as the local IP address and/or IP address prefix of the trusted WLAN access network for the UE; and in the case where the flow routing policy of the UE is empty, the allocation component is configured to allocate the IP address and/or IP address prefix from the EPC and the local IP address and/or IP address prefix of the trusted WLAN access network which are allocated for the UE.

An embodiment of the present invention further provides a device for accessing a network address. Fig. 7 is a schematic structure diagram of device II for accessing a network address according to an embodiment of the present invention. As shown in Fig. 7, the device comprises:
a receiving component 702 configured to receive at least one network address allocated by a trusted WLAN access network for the UE according to a flow routing policy of the UE; and
an access component 704 configured to access a corresponding network according to the at least one network address.

In another embodiment of the present invention, the receiving component 704 can further be configured to be at least one of the following: in the case where the flow routing policy of the UE is that a data service of the UE can only make an access via the EPC, the receiving component is configured to receive an IP address and/or IP address prefix from the EPC which are/is allocated by the trusted WLAN access network for the UE; in the case where the flow routing policy of the UE is that the data service of the UE can only be offloaded via the trusted WLAN access network, the receiving component is configured to receive a local IP address and/or IP address prefix of the trusted WLAN access network allocated by the trusted WLAN access network for the UE; in the case where the flow routing policy of the UE is that the data service of the UE makes an access via the EPC and is offloaded via the trusted WLAN access network, the receiving component is configured to receive the IP address and/or IP address prefix from the EPC and the local IP address and/or IP address prefix of the trusted WLAN access network which are allocated by the trusted WLAN access network for the UE; and in the case where the flow routing policy of the UE is empty, the receiving component is configured to receive the IP address and/or IP address prefix from the EPC and the local IP address and/or IP address prefix of the trusted WLAN access network which are allocated by the trusted WLAN access network for the UE.

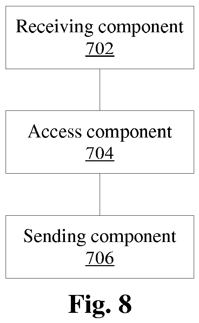

In another embodiment of the present invention, in the case where the flow routing policy of the UE is that the data service of the UE makes an access via the EPC and is offloaded via the trusted WLAN access network, or in the case where the flow routing policy of the UE is empty, as shown in Fig. 8, the device may further comprise a sending component 706 configured to send an address type request to an ANDSF, wherein the address type request may carry the at least one network address; the receiving component 702 may further be configured to receive an address type as a response of the ANDSF to the address type request, wherein the address type represents that the at least one network address is allocated by the trusted WLAN access network and/or allocated by the EPC; and the access component 704 may further be configured to select a corresponding network address for the data service of the UE according to the address type, and access the corresponding network according to the selected network address.

An embodiment of the present invention further provides a WLAN comprising the device I for accessing the network address provided by an embodiment of the present invention.

An embodiment of the present invention further provides a UE comprising the device II for accessing the network address provided by an embodiment of the present invention.

An embodiment of the present invention further provides a system for accessing a network address comprising the WLAN provided by the above embodiment of the present invention and the UE provided by the above embodiment of the present invention.

In another preferred embodiment of the present invention, the system may further comprise an ADNSF configured to respond to an address type request of the UE and generate an address type and send the address type to the UE.

In the following embodiments, a precondition for this scheme is that, after the WLAN access network supports the UE to be connected to one SSID, the UE is not only able to be connected to the EPC via the S2a but also be able to offload services to the Internet using the SSID. In the authentication process of the UE, the trusted WLAN access network can obtain the flow routing policy of the UE from an HSS/AAA. The UE can select, according to a matched IP address allocated by a network side, a matched IP address for the UE to initiate a data service, without needing to show capabilities supported thereby to the network side.

### Preferred embodiment I

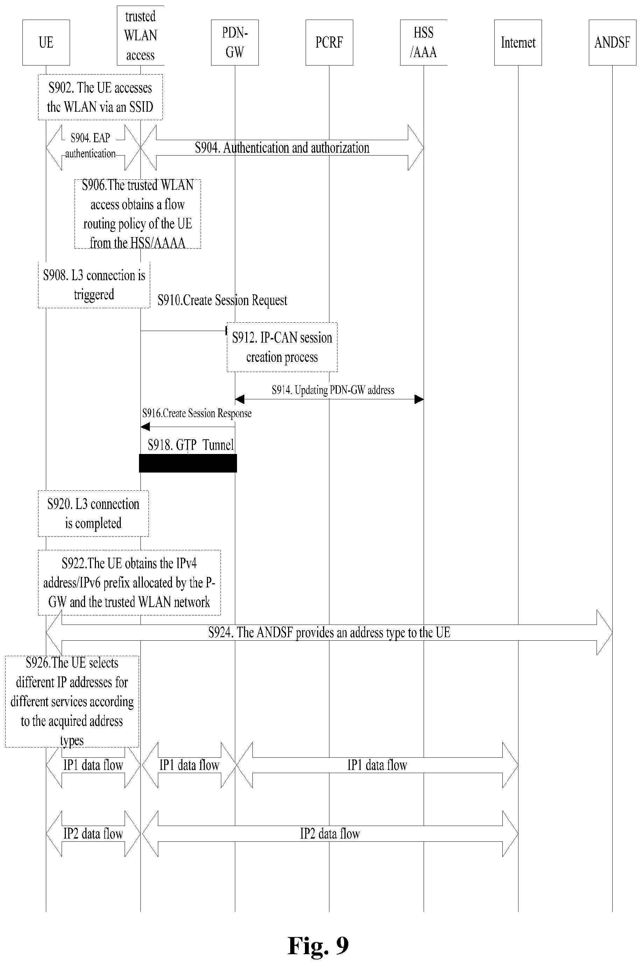

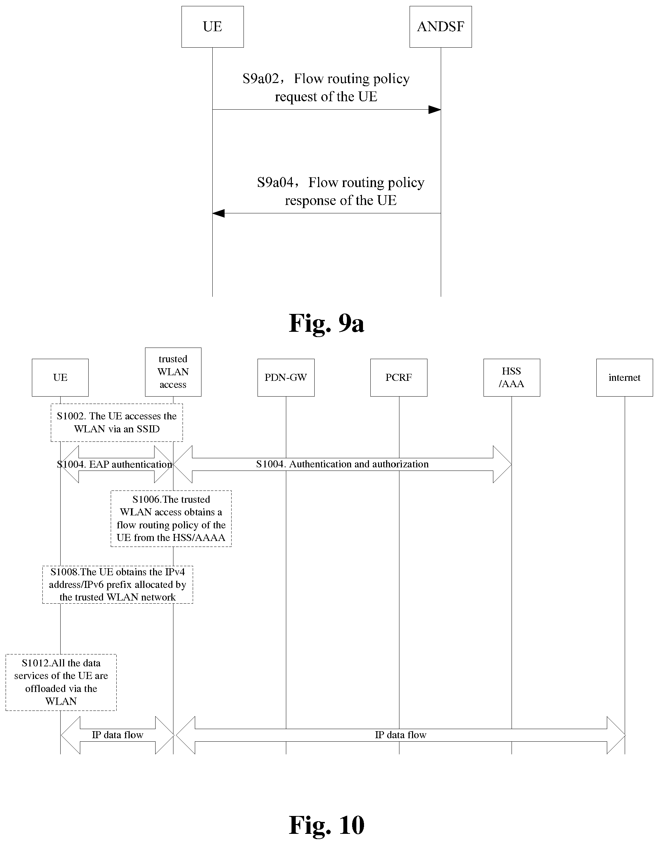

Fig. 9 is a flowchart of a method for accessing a network address in which a UE accesses an EPC and a trusted WLAN access network at the same time according to a preferred embodiment of the present invention. As shown in Fig. 9, the method comprises the following steps:
Step S902, the UE accesses the trusted WLAN access network by means of an SSID of the trusted WLAN.
Step S904, the UE completes an access authentication and authorization progress.
Step S906, a flow routing policy of the UE is acquired.

In the authentication and authorization process of the UE, the trusted WLAN access network obtains user profile information from the HSS/AAA, wherein the information contains the flow routing policy of the UE. For example, after the UE authentication succeeds, the HSS/AAA pushes the user profile information to the trusted WLAN access network by means of an AAA message. The flow routing policy of the UE may comprise: a data service of the UE can only make an access via an EPC; the data service of the UE can only be offloaded via the trusted WLAN access network; or the data service of the UE can both make an access via the EPC and be offloaded via the trusted WLAN access network.

In the embodiment of the present invention, it is supposed that the acquired flow routing policy of the UE is the third case, i.e. the data service of the UE can both make an access via the EPC and be offloaded via the trusted WLAN access network.

In steps S908-S920, since an S2a connection needs to be created, a layer-3 message of the UE will trigger the access to the EPC via the S2a interface; and in addition to layer-3 message trigger, the S2a can also be triggered to access the EPC utilizing EAP and AAA signalling. In step S916, the PDN GW returns an IP address and/or IP address prefix which are/is allocated to the UE to the trusted WLAN access network and are/is contained in a Create Session Response message. Steps S910-920 describe the connection process of accessing the EPC via the S2a interface. The particular process is as follows:
Step S908, L3 is used for successively triggering a connection process.

The trusted WLAN access network decides whether to create an S2a connection by means of an HSS/AAA instruction or profile information preset. If an S2a connection needs to be created, an L3, i.e. a layer-3 message, of the UE will trigger a connection process of accessing an EPC via the S2a interface.
Step S910, a Create Session Request is sent.
Step S912, an IP Connectivity Access Network (IP-CAN) session creation process.
Step S914, a PDN-GW address is updated.
Step S916, a Create Session Response is returned.

The PDN GW returns, in a Create Session Response message, an IP address and/or an IP address prefix allocated to the UE to the trusted WLAN access network.
Step S918, a GTP tunnel is created.
Step S920, an L3 connection is completed.
Step S922, a network address is allocated.

When the trusted WLAN access network allocates an IP address for the UE, since the UE needs to support EPC access and WLAN offload at the same time, the UE must be configured with at least two different IP addresses for sending different data services.

If an IPv4 address is configured, in step S906, the UE may initiate a Dynamic Host Configuration Protocol version 4 (DHCPv4) discovery message; and in a DHCPv4 interaction process of step S920, the UE obtains two IPv4 addresses from the trusted WLAN access network, wherein one is allocated by a PDN GW and is used for EPC access; and the other is allocated by the trusted WLAN access network and is used for WLAN offload. The two IP addresses may be in different forms, for example, belonging to different IP address fields, and be used for constituting a subsequent inter-system policy of the ANDSF.

If an IPv6 address is configured, the UE may use address configuration with a state, and may also use address configuration without a state.

If the address configuration with a state is used, in step S906, the UE may initiate a DHCPv6 solicit message; and in a DHCPv6 interactive process in the step S920, the UE obtains two IPv6 addresses from the trusted WLAN network, wherein one is allocated by a PDN GW and used for EPC access; and the other is allocated by the trusted WLAN network and is used for WLAN offload. The two IP addresses may be in different forms, for example, belonging to different IP sub-network prefixes, and be used for constituting a subsequent flow routing policy of the ANDSF.

If the address configuration without a state is used, in step S906, the UE may initiate a Router Solicitation (RS) or a Neighbor Solicitation (NS) message; and in step S920, the trusted WLAN may allocates two different IPv6 prefixes to the UE through a Router Advertisement (RA), and the UE uses the two different IPv6 prefixes to automatically generate two IPv6 addresses, and one IPv6 prefix is allocated by the PDN GW and is used for EPC access; and the other is allocated by the trusted WLAN network and is used for WLAN offload.

Step S924, the UE acquires an address type from the ANDSF.

The particular flow for acquiring the address type is as shown in Fig. 9a, comprising: step S9a02, after acquiring the address, the UE sends an address type request to the ANDSF, wherein the address type request carries the IP addresses and/or IP address prefixes obtained by the UE; step S9a04, after receiving the address type request, the ANDSF returns, according to the IP addresses and/or IP address prefixes contained in the address type request, address types corresponding to the IP addresses and/or IP address prefixes to show that whether the IP addresses and/or IP address prefixes are allocated by the trusted WLAN access or allocated by the EPC, so as to make it convenient for the UE to select an appropriate address for a data service later.

Step S926, the UE selects a matched network address for a data service according to the address type. For example, data service 1 needs direct WLAN offload, then it selects network address IP1; and data service 2 needs to be routed by the EPC, then it selects network address IP2. Thus, the UE can respectively use the IP1 and the IP2 for communications between different data services.

### Preferred embodiment II

In one embodiment, in an authentication process of a UE, a trusted WLAN access network can obtain a flow routing policy of the UE from an HSS/AAA. The flow routing policy of the UE is that all the data services of the UE can only be offloaded via the trusted WLAN access network.

Fig. 10 is a flowchart of a method for accessing a network address in which a UE can only make an access via a trusted WLAN access network according to a preferred embodiment of the present invention. As shown in Fig. 10, the method comprises the following steps:
Step S1002, the UE accesses the trusted WLAN access network by means of an SSID of the trusted WLAN access network.
Step S 1004, the UE completes an access authentication and authorization progress.
Step S 1006, the trusted WLAN access network acquires a flow routing policy of a UE.

In the authentication and authorization progress of the UE, the trusted WLAN access network obtains, from the HSS/AAA, user profile information, i.e. the flow routing policy of the UE. For example, after the UE authentication succeeds, the HSS/AAA pushes the flow routing policy of the UE to the trusted WLAN access network by means of an AAA message. In the present embodiment, it is assumed that the flow routing policy of the UE is that all the data services of a user can only be offloaded via the trusted WLAN access network.
step S1008, the trusted WLAN access network allocates a network address for the UE.

If the UE is to be configured with an IPv4 address, then the UE is configured with one IPv4 address by the trusted WLAN network through a DHCPv4 process.

If the UE is to be configured with an IPv6 address, then the UE may use address configuration with a state, that is one IPv6 address is allocated to the UE by the trusted WLAN network through a DHCPv6 process; the UE may also use address configuration without a state, that is one IPv6 prefix is allocated to the UE by the trusted WLAN network, and then the UE automatically generate one IPv6 address according to the allocated IPv6 prefix.

Step S1010, the UE accesses the network according to the allocated network address.

All the data services of the UE are offloaded, using the network address obtained in step S1008, to the Internet via the trusted WLAN access network.

### Preferred embodiment III

In one embodiment, in an authentication process of a UE, a trusted WLAN access network can obtain a user policy of the UE from an HSS/AAA. The user policy of the UE is that all the data services of the UE can only make an access via an EPC.

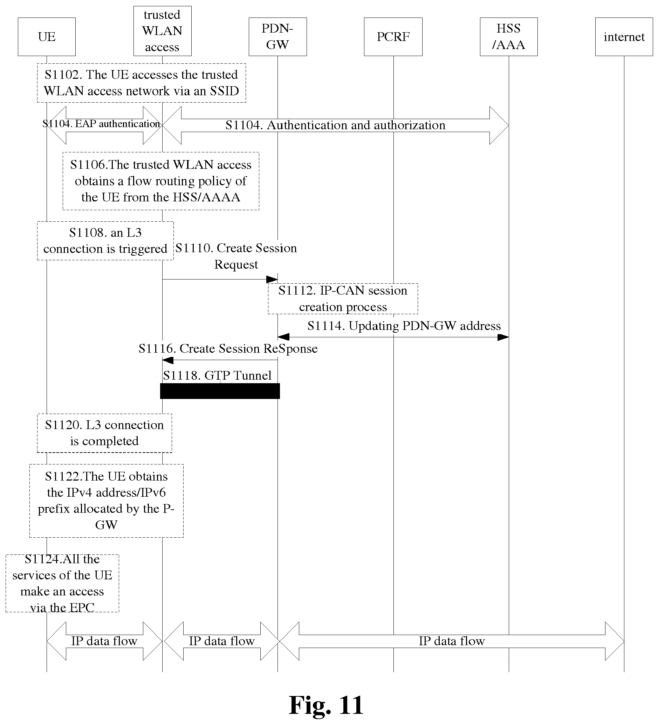

Fig. 11 is a flowchart of a method for accessing a network address in which a UE can only make an access via an EPC according to a preferred embodiment of the present invention. As shown in Fig. 11, the method comprises the following steps:
Step S1102, the UE accesses the trusted WLAN access network via an SSID;
Step S1104, the UE completes an access authentication and authorization progress.
Step S1106, the trusted WLAN access network acquires a flow routing policy of a UE.

In the authentication and authorization progress of the UE, the trusted WLAN access network obtains, from the HSS/AAA, user profile information, i.e. the flow routing policy of the UE. For example, after the UE authentication succeeds, the HSS/AAA pushes the flow routing policy of the UE to the trusted WLAN access network by means of an AAA message. In the present embodiment, it is assumed that the flow routing policy of the UE is that all the data services of a user can only make an access via the EPC.

In steps S1108-S1120, since an S2a connection needs to be created, a layer-3 message of the UE will trigger a connection process of accessing the EPC via the S2a interface; and not only the layer-3 message but also the EAP and AAA signalling may trigger the process of accessing the EPC by the S2a. In addition, in step S1116, the PDN GW returns an IP address/address prefix which is allocated to the UE to the trusted WLAN access network and is contained in a Create Session Response message. Steps S108-S1120 are similar to steps S908-S920, which will not be described here.

Step S1122, the trusted WLAN access network allocates an IP address for the UE.

If an IPv4 address is to be configured, in step S1106, the UE may initiate a DHCPv4 discovery message; and in a DHCPv4 interactive process of step S1120, the UE obtains one IPv4 address from the trusted WLAN access network, wherein the address is a network address allocated by the PDN GW in step S1116, and is used for EPC access.

If an IPv6 address is to be configured, the UE may use address configuration with a state, and may also use address configuration without a state.

If address configuration with a state is used, in step S1106, the UE may initiate a DHCPv6 solicit message; and in a DHCPv6 interactive process of step S1120, the UE obtains one IPv6 address from the trusted WLAN access network, wherein the address is a network address allocated by the PDN GW and acquired in step S1116, and is used for EPC access.

If address configuration with a state is used, in step S1106, the UE may initiate an RS or NS message; and in step S1120, the trusted WLAN may allocate one IPv6 prefix to the UE by means of the RA, wherein the IPv6 prefix is a network address allocated by the PDN GW in step S1116, and is used for EPC access.

Step S1124, the UE accesses the network according to the allocated network address.

All the data services of the UE are offloaded, using the network address obtained in step S1122, to the Internet via the EPC.

### Preferred example IV

In one example, in an authentication process of a UE, a trusted WLAN access network cannot obtain a flow routing policy similar to that of the UE from an HSS/AAA.

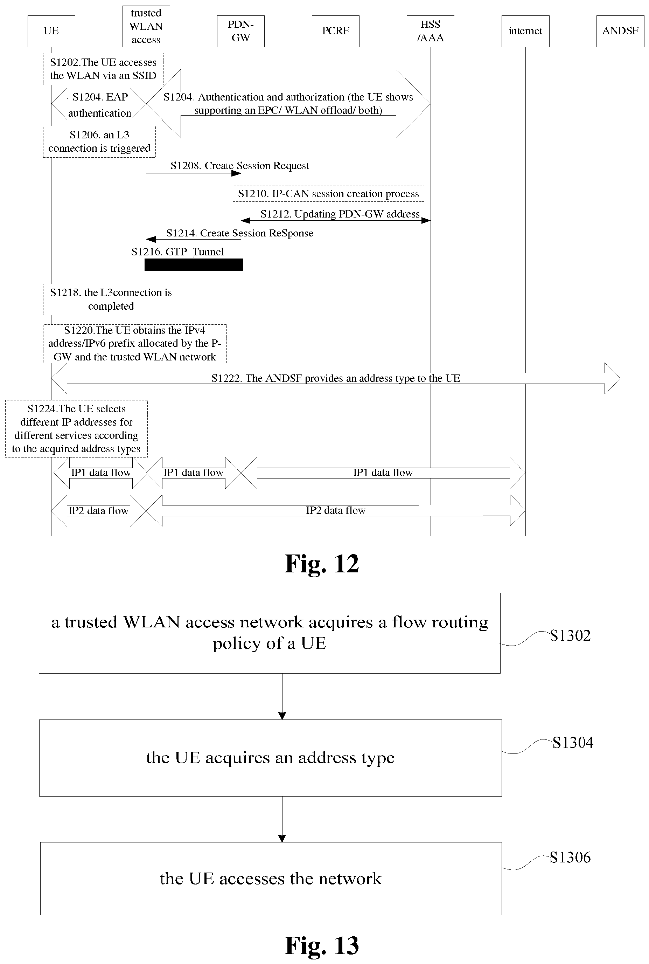

Fig. 12 is a flowchart of a method for accessing a network address in the case where no flow routing policy of the UE is acquired according to a preferred example of the present invention. As shown in Fig. 12, the method comprises the following steps:
Step S1202, the UE accesses the trusted WLAN access network via an SSID.
Step S1204, the UE completes an access authentication and authorization progress. In the authentication and authorization progress of the UE, the trusted WLAN access network does not obtain, from the HSS/AAA, user profile information containing the flow routing policy of the UE.

In steps S1206-S1218, since an S2a connection needs to be created, a layer-3 message of the UE will trigger a connection process of accessing the EPC via the S2a interface; and in addition to layer-3 message may trigger the process of accessing the EPC by the S2a, the process of accessing the EPC by the S2a can also be triggered utilizing EAP and AAA signalling. In addition, in step S1214, the PDN GW returns an IP address and/or IP address prefix which are/is allocated to the UE to the trusted WLAN access network and are/is contained in a Create Session Response message.

Step S1220, a network address is allocated.

The trusted WLAN access network allocates, for the UE, a network address such as an IP address. Because the trusted WLAN access network does not know the flow routing policy of the UE, the trusted WLAN access network allocates, for the UE, two different IP addresses for sending different data services in default, wherein one network address is used for WLAN offload, and the other is used for the EPC access.

If an IPv4 address is to be configured, then in step S1206, the UE may initiate a DHCPv4 discovery message. In a DHCPv4 interactive process of step S1220, the UE obtains two IPv4 addresses from the trusted WLAN network, wherein one is allocated by a PDN GW and used for EPC access; and the other is allocated by the trusted WLAN access network and is used for WLAN offload. The two IP addresses may be in different forms, for example, belonging to different IP address fields, and be used for constituting subsequent inter-system policies of the ANDSF.

If an IPv6 address is to be configured, the UE may use address configuration with a state, and may also use address configuration without a state.

If the address configuration with a state is used, in step S1206, the UE may initiate a DHCPv6 solicit message; and in a DHCPv6 interactive process of step S1220, the UE obtains two IPv6 addresses from the trusted WLAN network, wherein one is allocated by a PDN GW and used for EPC access; and the other is allocated by the trusted WLAN access network and is used for WLAN offload. The two IP addresses may be in different forms, for example, belonging to different IP sub-network prefixes, and be used for constituting a subsequent inter-system policy of the ANDSF.

If the address configuration without a state is used, in step S1206, the UE may initiate an RS or an NS message; and in step S 1220, the trusted WLAN may allocates two different IPv6 prefixes to the UE through an RA, and the UE uses the two different IPv6 prefixes to automatically generate two IPv6 addresses, and one IPv6 prefix is allocated by the PDN GW and is used for EPC access; and the other is allocated by the trusted WLAN network and is used for WLAN offload.

Step S 1222, the UE acquires an address type from the ANDSF.

The UE acquires the address type from the ANDSF, such as an IP address type.

Step S1224, the UE selects a network address according to the address type.

The UE uses the address type obtained in step S1222 to select a matched network address for a data service. For example, it is assumed that the obtained address type shows that the data service of the UE needs direct WLAN offload, then the UE selects a network address IP1 allocated by the trusted WLAN access network; and it is assumed that the obtained address type shows that a specific data service of the UE needs to be routed via the EPC, then the UE selects a network address IP2 allocated by the EPC. Thus, the UE can respectively use the IP1 and the IP2 for different data services.

If the UE only uses the WLAN offload to perform data service offload, with regard to the above-mentioned created cellular bearer resource (i.e. EPC access), the UE can initiate a corresponding reattachment process, so as to avoid the waste of network resources.

### Preferred embodiment V

Fig. 13 is a flowchart of a method for a UE to acquire an address type in a heterogeneous converged network of cellular and WLAN according to an embodiment of the present invention. As shown in Fig. 13, the method comprises the following steps:
Step S1302, a trusted WLAN access network acquires a flow routing policy of a UE.

After the UE is connected to the trusted WLAN access network, the trusted WLAN access network acquires the flow routing policy of the UE, wherein the flow routing policy of the UE may comprise the following four situations:
If the flow routing policy of the UE is that all the data services of the UE can only make an access via the EPC, then the trusted WLAN access network allocates an IP address and/or IP address prefix from the EPC for the UE.

If the flow routing policy of the UE is that all the data services of the UE can only be offloaded via the WLAN, then the trusted WLAN access network allocates a local IP address and/or IP address prefix of the WLAN for the UE.

If the flow routing policy of the UE is that all the data services of the UE can make an access via the EPC and can also be offloaded via the WLAN, then the trusted WLAN access network allocates an IP address and/or IP address prefix from the EPC and a local IP address and/or IP address prefix of the WLAN for the UE.

If the trusted WLAN access network does not obtain the flow routing policy of the UE from the HSS/AAA, then the trusted WLAN network allocates an IP address and/or IP address prefix from the EPC and a local IP address and/or IP address prefix of the WLAN for the UE.

Step S 1304, the UE acquires an address type.

The ANDSF receives an address type request sent by the UE, wherein the address type request contains the IP address and/or IP address prefix obtained by the UE. The ANDSF returns an address type corresponding to the address type request to the UE, wherein the address type shows that the address is allocated by the trusted WLAN access network or allocated by the EPC. In the case where the flow routing policy of the UE is the first two situations as described in steps S1302, that is, the access can only be made via the trusted WLAN access network or made via the EPC access, step S1304 can be omitted.

Step S 1306, the UE accesses the network.

The UE selects a corresponding network address for the data service according to the acquired network address and/or address type, so as to access the network.

It can be seen from the above-mentioned description that the embodiments of the present invention realize the following technical effects: the forward compatibility of the UE is improved, and the time for the UE to acquire the network address is shortened.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The above description is only example embodiments of the present invention and is not intended to limit the present invention, and the present invention can have a variety of changes and modifications for ordinary person skilled in the field. Any amendments, equivalent substitutions, improvements, etc. within the principle of the present invention are all included in the scope of the protection as defined by the appended claims of the present invention.

### Industrial applicability

As described above, the method, device and system for accessing a network address provided in the embodiments of the present invention have the following beneficial effects: the forward compatibility of a UE is improved, and the time for the UE to acquire a network address is shortened.

## Claims

1. A method for processing a network address, comprising:
acquiring, by a trusted Wireless Local Area Network, WLAN, access network, a flow routing policy of a User Equipment, UE (S402);
allocating, by the trusted WLAN access network, at least one network address for the UE according to the flow routing policy of the UE (S404);
**characterized by** in a case where the flow routing policy of the UE is empty, allocating, by the trusted WLAN access network, the at least one network address for the UE according to the flow routing policy of the UE (S404) comprises: allocating, by the trusted WLAN access network, an IP address and/or IP address prefix from an Evolved Packet Core, EPC, as well as a local IP address and/or IP address prefix of the trusted WLAN access network for the UE.

2. The method according to claim 1, **characterized in that** the flow routing policy of the UE comprises at least one of the following: a data service of the UE can only make an access viathe EPC; the data service of the UE can only be offloaded via the trusted WLAN access network; the data service of the UE makes an access via the EPC and is offloaded via the trusted WLAN access network; and the flow routing policy of the UE is empty.

3. The method according to claim 2, **characterized in that** allocating, by the trusted WLAN access network, the at least one network address for the UE according to the flow routing policy of the UE (S404) comprises at least one of the following:
in the case where the flow routing policy of the UE is that the data service of the UE can only make the access via the EPC, allocating, by the trusted WLAN access network, an IP address and/or IP address prefix from the EPC for the UE;
in the case where the flow routing policy of the UE is that the data service of the UE can only be offloaded via the trusted WLAN access network, allocating, by the trusted WLAN access network, a local IP address and/or IP address prefix of the trusted WLAN access network for the UE;
in the case where the flow routing policy of the UE is that the data service of the UE makes the access via the EPC and is offloaded via the trusted WLAN access network, allocating, by the trusted WLAN access network, the IP address and/or IP address prefix from the EPC as well as the local IP address and/or IP address prefix of the trusted WLAN access network for the UE.

4. A method for processing a network address, comprising
receiving, by a User Equipment, UE, at least one network address allocated by a trusted Wireless Local Area Network, WLAN access network for the UE according to a flow routing policy of the UE (S502); and
accessing, by the UE, a corresponding network according to the at least one network address (S504);
**characterized by** in a case where the flow routing policy of the UE is empty, receiving, by the UE, an IP address and/or IP address prefix from an Evolved Packet Core ,EPC, and a local IP address and/or IP address prefix of the trusted WLAN access network which are allocated by the trusted WLAN access network for the UE.

5. The method according to claim 4, **characterized in that** the flow routing policy of the UE comprises at least one of the following: a data service of the UE can only make an access via the EPC; the data service of the UE can only be offloaded via the trusted WLAN access network; the data service of the UE makes an access via the EPC and is offloaded via the trusted WLAN access network; and the flow routing policy of the UE is empty.

6. The method according to claim 5, **characterized in that** receiving, by the UE, the at least one network address allocated by the trusted WLAN access network for the UE according to the flow routing policy of the UE (S502) further comprises:
in the case where the flow routing policy of the UE is that the data service of the UE can only make the access via the EPC, receiving, by the UE, an IP address and/or IP address prefix from the EPC which are/is allocated by the trusted WLAN access network for the UE;
in the case where the flow routing policy of the UE is that the data service of the UE can only be offloaded via the trusted WLAN access network, receiving, by the UE, a local IP address and/or IP address prefix of the trusted WLAN access network which are/is allocated by the trusted WLAN access network for the UE;
in the case where the flow routing policy of the UE is that the data service of the UE makes the access via the EPC and is offloaded via the trusted WLAN access network, receiving, by the UE, the IP address and/or IP address prefix from the EPC and the local IP address and/or IP address prefix of the trusted WLAN access network which are allocated by the trusted WLAN access network for the UE.

7. The method according to claim 6, **characterized in that**, in the case where the flow routing policy of the UE is that the data service of the UE makes the access via the EPC and is offloaded via the trusted WLAN access network, or in the case where the flow routing policy of the UE is empty, accessing, by the UE, the corresponding network according to the at least one network address (S504) comprises:
sending, by the UE, an address type request to an Access Network Discovery and Selection Function, ANDSF, wherein the address type request carries the at least one network address;
receiving, by the UE, an address type as a response of the ANDSF to the address type request, wherein the address type represents that the at least one network address is allocated by the trusted WLAN access network and/or allocated by the EPC; and
selecting, by the UE, the corresponding network address for a data service of the UE according to the address type, and accessing the corresponding network according to the selected network address.

8. A device for processing a network address, comprising:
an acquisition component (602) configured to acquire a flow routing policy of a User Equipment (UE); and
an allocation component (604) configured to allocate at least one network address for the UE according to the flow routing policy of the UE;
**characterized in that** in a case where the flow routing policy of the UE is empty, the allocation component (604) is configured to allocate an IP address and/or IP address prefix from an Evolved Packet Core ,EPC, and a local IP address and/or IP address prefix of the trusted WLAN access network which are allocated for the UE.

9. The device according to claim 8, **characterized in that** the allocation component (604) is further configured to be at least one of the following:
in the case where the flow routing policy of the UE is that a data service of the UE can only make an access via the EPC, the allocation component (604) is configured to allocate an IP address and/or IP address prefix from the EPC for the UE;
in the case where the flow routing policy of the UE is that the data service of the UE can only be offloaded via the trusted WLAN access network, the allocation component (604) is configured to allocate a local IP address and/or IP address prefix of the trusted WLAN access network for the UE;
in the case where the flow routing policy of the UE is that the data service of the UE makes an access via the EPC and is offloaded via the trusted WLAN access network, the allocation component (604) is configured to allocate the IP address and/or IP address prefix from the EPC as well as the local IP address and/or IP address prefix of the trusted WLAN access network for the UE.

10. A device for processing a network address, comprising:
a receiving component (702) configured to receive at least one network address allocated by a trusted Wireless Local Area Network, WLAN, access network for the UE according to a flow routing policy of the UE; and
an access component (704) configured to access a corresponding network according to the at least one network address;
**characterized in that** in a case where the flow routing policy of the UE is empty, the receiving component (702) is configured to receive an IP address and/or IP address prefix from an Evolved Packet Core ,EPC, and a local IP address and/or IP address prefix of the trusted WLAN access network which are allocated by the trusted WLAN access network for the UE.

11. The device according to claim 10, **characterized in that** the receiving component (702) is further configured to be at least one of the following:
in the case where the flow routing policy of the UE is that a data service of the UE can only make an access via the EPC, the receiving component (702) is configured to receive an IP address and/or IP address prefix from the EPC which is allocated by the trusted WLAN access network for the UE;
in the case where the flow routing policy of the UE is that the data service of the UE can only be offloaded via the trusted WLAN access network, the receiving component (702) is configured to receive a local IP address and/or IP address prefix of the trusted WLAN access network which are/is allocated by the trusted WLAN access network for the UE;
in the case where the flow routing policy of the UE is that the data service of the UE makes the access via the EPC and offloaded via the trusted WLAN access network, the receiving component (702) is configured to receive the IP address and/or IP address prefix from the EPC and the local IP address and/or IP address prefix of the trusted WLAN access network which are allocated by the trusted WLAN access network for the UE.

12. The device according to claim 11, **characterized in that**, in the case where the flow routing policy of the UE is that the data service of the UE makes the access via the EPC and is offloaded via the trusted WLAN access network, or in the case where the flow routing policy of the UE is empty,
the device further comprises a sending component (706) configured to send an address type request to an Access Network Discovery and Selection Function, ANDSF, wherein the address type request carries the at least one network address;
the receiving component (702) is further configured to receive an address type as a response of the ANDSF to the address type request, wherein the address type represents that the at least one network address is allocated by the trusted WLAN access network and/or allocated by the EPC; and
the access component (704) is further configured to select a corresponding network address for the data service of the UE according to the address type, and access the corresponding network according to the selected network address.

13. A system for processing a network address, **characterized by** comprising: a Wireless Local Area Network, WLAN, and a User Equipment, UE, wherein the WLAN comprises the device as claimed in claim 8 or 9, the UE comprises the device as claimed in any one of claims 10-12.

## Patentansprüche

1. Verfahren zum Verarbeiten einer Netzwerkadresse, umfassend:
Beziehen, durch ein vertrauenswürdiges Wireless Local Area Network-, WLAN, Zugangsnetzwerk, einer Flow-Routing-Richtlinie eines User Equipments, UE (S402);
Zuweisen, durch das vertrauenswürdige WLAN-Zugangsnetzwerk, von mindestens einer Netzwerkadresse für das UE gemäß der Flow-Routing-Richtlinie des UEs (S404) ;
**dadurch gekennzeichnet, dass**
in einem Fall, in dem die Flow-Routing-Richtlinie des UEs leer ist, das Zuweisen, durch das vertrauenswürdige WLAN-Zugangsnetzwerk, der mindestens einen Netzwerkadresse für das UE gemäß der Flow-Routing-Richtlinie des UEs (S404) umfasst: Zuweisen, durch das vertrauenswürdige WLAN-Zugangsnetzwerk, einer IP-Adresse und/oder eines IP-Adress-Präfix von einem Evolved Packet Core, EPC, sowie einer lokalen IP-Adresse und/oder eines IP-Adress-Präfix des vertrauenswürdigen WLAN-Zugangsnetzwerks für das UE.

2. Verfahren nach Anspruch 1, **dadurch gekennzeichnet, dass** die Flow-Routing-Richtlinie des UEs mindestens eines aus den Folgenden umfasst: ein Datendienst des UEs kann einen Zugang nur über den EPC herstellen; der Datendienst des UEs kann nur über das vertrauenswürdige WLAN-Zugangsnetzwerk abgeladen werden; der Datendienst des UEs stellt einen Zugang über den EPC her und wird über das vertrauenswürdige WLAN-Zugangsnetzwerk abgeladen; und die Flow-Routing-Richtlinie des UEs ist leer.

3. Verfahren nach Anspruch 2, **dadurch gekennzeichnet, dass** das Zuweisen, durch das vertrauenswürdige WLAN-Zugangsnetzwerk, der mindestens einen Netzwerkadresse für das UE gemäß der Flow-Routing-Richtlinie des UEs (S404) mindestens eines aus den Folgenden umfasst:
in dem Fall, in dem die Flow-Routing-Richtlinie des UEs lautet, dass der Datendienst des UEs den Zugang nur über den EPC herstellen kann, Zuweisen, durch das vertrauenswürdige WLAN-Zugangsnetzwerk, einer IP-Adresse und/oder eines IP-Adress-Präfix vom EPC für das UE;
in dem Fall, in dem die Flow-Routing-Richtlinie des UEs lautet, dass der Datendienst des UEs nur über das vertrauenswürdige WLAN-Zugangsnetzwerk abgeladen werden kann, Zuweisen, durch das vertrauenswürdige WLAN-Zugangsnetzwerk, einer lokalen IP-Adresse und/oder eines IP-Adress-Präfix des vertrauenswürdigen WLAN-Zugangsnetzwerks für das UE;
in dem Fall, in dem die Flow-Routing-Richtlinie des UEs lautet, dass der Datendienst des UEs den Zugang über den EPC herstellt und über das vertrauenswürdige WLAN-Zugangsnetzwerk abgeladen wird, Zuweisen, durch das vertrauenswürdige WLAN-Zugangsnetzwerk, der IP-Adresse und/oder des IP-Adress-Präfix vom EPC sowie der lokalen IP-Adresse und/oder des IP-Adress-Präfix des vertrauenswürdigen WLAN-Zugangsnetzwerks für das UE.

4. Verfahren zum Verarbeiten einer Netzwerkadresse, umfassend
Empfangen, durch ein User Equipment, UE, von mindestens einer Netzwerkadresse, die von einem vertrauenswürdigen Wireless Local Area Network-, WLAN, Zugangsnetzwerk gemäß einer Flow-Routing-Richtlinie des UEs für das UE zugewiesen wird (S502); und
Zugreifen, durch das UE, auf ein entsprechendes Netzwerk gemäß der mindestens einen Netzwerkadresse (S504) ;
**gekennzeichnet durch**
in einem Fall, in dem die Flow-Routing-Richtlinie des UEs leer ist, Empfangen, durch das UE, einer IP-Adresse und/oder eines IP-Adress-Präfix von einem Evolved Packet Core, EPC, und einer lokalen IP-Adresse und/oder eines IP-Adress-Präfix des vertrauenswürdigen WLAN-Zugangsnetzwerks, die vom vertrauenswürdigen WLAN-Zugangsnetzwerk für das UE zugewiesen werden.

5. Verfahren nach Anspruch 4, **dadurch gekennzeichnet, dass** die Flow-Routing-Richtlinie des UEs mindestens eines aus den folgenden umfasst: ein Datendienst des UEs kann einen Zugang nur über den EPC herstellen; der Datendienst des UEs kann nur über das vertrauenswürdige WLAN-Zugangsnetzwerk abgeladen werden; der Datendienst des UEs stellt einen Zugang über den EPC her und wird über das vertrauenswürdige WLAN-Zugangsnetzwerk abgeladen; und die Flow-Routing-Richtlinie des UEs ist leer.

6. Verfahren nach Anspruch 5, **dadurch gekennzeichnet, dass** das Empfangen, durch das UE, der mindestens einen Netzwerkadresse, die vom vertrauenswürdigen WLAN-Zugangsnetzwerk gemäß der Flow-Routing-Richtlinie des UEs für das UE zugewiesen wird (S502), weiter umfasst:
in dem Fall, in dem die Flow-Routing-Richtlinie des UEs lautet, dass der Datendienst des UEs den Zugang nur über den EPC herstellen kann, Empfangen, durch das UE, einer IP-Adresse und/oder eines IP-Adress-Präfix vom EPC, die/das vom vertrauenswürdigen WLAN-Zugangsnetzwerk für das UE zugewiesen wird/werden;
in dem Fall, in dem die Flow-Routing-Richtlinie des UEs lautet, dass der Datendienst des UEs nur über das vertrauenswürdige WLAN-Zugangsnetzwerk abgeladen werden kann, Empfangen, durch das UE, einer lokalen IP-Adresse und/oder eines IP-Adress-Präfix des vertrauenswürdigen WLAN-Zugangsnetzwerks, die/das vom vertrauenswürdigen WLAN-Zugangsnetzwerk für das UE zugewiesen wird/werden;
in dem Fall, in dem die Flow-Routing-Richtlinie des UEs lautet, dass der Datendienst des UEs den Zugang über den EPC herstellt und über das vertrauenswürdige WLAN-Zugangsnetzwerk abgeladen wird, Empfangen, durch das UE, der IP-Adresse und/oder des IP-Adress-Präfix vom EPC und der lokalen IP-Adresse und/oder des IP-Adress-Präfix des vertrauenswürdigen WLAN-Zugangsnetzwerks, die vom vertrauenswürdigen WLAN-Zugangsnetzwerk für das UE zugewiesen werden.

7. Verfahren nach Anspruch 6, **dadurch gekennzeichnet, dass** in dem Fall, in dem die Flow-Routing-Richtlinie des UEs lautet, dass der Datendienst des UEs den Zugang über den EPC herstellt und über das vertrauenswürdige WLAN-Zugangsnetzwerk abgeladen wird, oder in dem Fall, in dem die Flow-Routing-Richtlinie des UEs leer ist, das Zugreifen, durch das UE, auf das entsprechende Netzwerk gemäß der mindestens einen Netzwerkadresse (S504) umfasst:
Senden, durch das UE, einer Adresstypanfrage an eine Access Network Discovery and Selection Function, ANDSF, wobei die Adresstypanfrage die mindestens eine Netzwerkadresse übermittelt;
Empfangen, durch das UE, eines Adresstyps als eine Antwort der ANDSF auf die Adresstypanfrage, wobei der Adresstyp wiedergibt, dass die mindestens eine Netzwerkadresse vom vertrauenswürdigen WLAN-Zugangsnetzwerk zugewiesen und/oder vom EPC zugewiesen wird; und
Auswählen, durch das UE, der entsprechenden Netzwerkadresse für einen Datendienst des UEs gemäß dem Adresstyp, und Zugreifen auf das entsprechende Netzwerk gemäß der ausgewählten Netzwerkadresse.

8. Vorrichtung zum Verarbeiten einer Netzwerkadresse, umfassend:
eine Bezugskomponente (602), die dazu konfiguriert ist, eine Flow-Routing-Richtlinie eines User Equipments (UE) zu beziehen; und
eine Zuweisungskomponente (604), die dazu konfiguriert ist, mindestens eine Netzwerkadresse für das UE gemäß der Flow-Routing-Richtlinie des UEs zuzuweisen;
**dadurch gekennzeichnet, dass**
in einem Fall, in dem die Flow-Routing-Richtlinie des UEs leer ist, die Zuweisungskomponente (604) dazu konfiguriert ist, eine IP-Adresse und/oder ein IP-Adress-Präfix von einem Evolved Packet Core, EPC, und eine lokale IP-Adresse und/oder ein IP-Adress-Präfix des vertrauenswürdigen WLAN-Zugangsnetzwerks zuzuweisen, die für das UE zugewiesen werden.

9. Vorrichtung nach Anspruch 8, **dadurch gekennzeichnet, dass** die Zuweisungskomponente (604) weiter dazu konfiguriert ist, mindestens eines aus den Folgenden zu sein:
in dem Fall, in dem die Flow-Routing-Richtlinie des UEs lautet, dass ein Datendienst des UEs einen Zugang nur über den EPC herstellen kann, die Zuweisungskomponente (604) dazu konfiguriert ist, eine IP-Adresse und/oder ein IP-Adress-Präfix vom EPC für das UE zuzuweisen;
in dem Fall, in dem die Flow-Routing-Richtlinie des UEs lautet, dass der Datendienst des UEs nur über das vertrauenswürdige WLAN-Zugangsnetzwerk abgeladen werden kann, die Zuweisungskomponente (604) dazu konfiguriert ist, eine lokale IP-Adresse und/oder ein IP-Adress-Präfix des vertrauenswürdigen WLAN-Zugangsnetzwerks für das UE zuzuweisen;
in dem Fall, in dem die Flow-Routing-Richtlinie des UEs lautet, dass der Datendienst des UEs einen Zugang über den EPC herstellt und über das vertrauenswürdige WLAN-Zugangsnetzwerk abgeladen wird, die Zuweisungskomponente (604) dazu konfiguriert ist, die IP-Adresse und/oder das IP-Adress-Präfix vom EPC sowie die lokale IP-Adresse und/oder das IP-Adress-Präfix des vertrauenswürdigen WLAN-Zugangsnetzwerks für das UE zuzuweisen.

10. Vorrichtung zum Verarbeiten einer Netzwerkadresse, umfassend:
eine Empfangskomponente (702), die dazu konfiguriert ist, mindestens eine Netzwerkadresse zu empfangen, die von einem vertrauenswürdigen Wireless Local Area Network-, WLAN, Zugangsnetzwerk gemäß einer Flow-Routing-Richtlinie des UEs für das UE zugewiesen wird; und
eine Zugriffskomponente (704), die dazu konfiguriert ist, gemäß der mindestens einen Netzwerkadresse auf ein entsprechendes Netzwerk zuzugreifen;
**dadurch gekennzeichnet, dass**
in einem Fall, in dem die Flow-Routing-Richtlinie des UEs leer ist, die Empfangskomponente (702) dazu konfiguriert ist, eine IP-Adresse und/oder ein IP-Adress-Präfix von einem Evolved Packet Core, EPC, und eine lokale IP-Adresse und/oder ein IP-Adress-Präfix des vertrauenswürdigen WLAN-Zugangsnetzwerks zu empfangen, die vom vertrauenswürdigen WLAN-Zugangsnetzwerk für das UE zugewiesen werden.

11. Vorrichtung nach Anspruch 10, **dadurch gekennzeichnet, dass** die Empfangskomponente (702) weiter dazu konfiguriert ist, mindestens eines aus den Folgenden zu sein:
in dem Fall, in dem die Flow-Routing-Richtlinie des UEs lautet, dass ein Datendienst des UEs einen Zugang nur über den EPC herstellen kann, die Empfangskomponente (702) dazu konfiguriert ist, eine IP-Adresse und/oder ein IP-Adress-Präfix vom EPC zu empfangen, die/das vom vertrauenswürdigen WLAN-Zugangsnetzwerk für das UE zugewiesen wird;
in dem Fall, in dem die Flow-Routing-Richtlinie des UEs lautet, dass der Datendienst des UEs nur über das vertrauenswürdige WLAN-Zugangsnetzwerk abgeladen werden kann, die Empfangskomponente (702) dazu konfiguriert ist, eine lokale IP-Adresse und/oder ein IP-Adress-Präfix des vertrauenswürdigen WLAN-Zugangsnetzwerks zu empfangen, die/das vom vertrauenswürdigen WLAN-Zugangsnetzwerk für das UE zugewiesen wird/werden;
in dem Fall, in dem die Flow-Routing-Richtlinie des UEs lautet, dass der Datendienst des UEs den Zugang über den EPC herstellt und über das vertrauenswürdige WLAN-Zugangsnetzwerk abgeladen, die Empfangskomponente (702) dazu konfiguriert ist, die IP-Adresse und/oder das IP-Adress-Präfix vom EPC und die lokale IP-Adresse und/oder das IP-Adress-Präfix des vertrauenswürdigen WLAN-Zugangsnetzwerks, die vom vertrauenswürdigen WLAN-Zugangsnetzwerk für das UE zugewiesen werden, zu empfangen.

12. Vorrichtung nach Anspruch 11, **dadurch gekennzeichnet, dass** in dem Fall, in dem die Flow-Routing-Richtlinie des UEs lautet, dass der Datendienst des UEs den Zugang über den EPC herstellt und über das vertrauenswürdige WLAN-Zugangsnetzwerk abgeladen wird, oder in dem Fall, in dem die Flow-Routing-Richtlinie des UEs leer ist,
die Vorrichtung weiter eine Sendekomponente (706) umfasst, die dazu konfiguriert ist, eine Adresstypanfrage an eine Access Network Discovery and Selection Function, ANDSF, zu senden, wobei die Adresstypanfrage die mindestens eine Netzwerkadresse übermittelt;
die Empfangskomponente (702) weiter dazu konfiguriert ist, einen Adresstyp als eine Antwort der ANDSF auf die Adresstypanfrage zu empfangen, wobei der Adresstyp wiedergibt, dass die mindestens eine Netzwerkadresse vom vertrauenswürdigen WLAN-Zugangsnetzwerk zugewiesen und/oder vom EPC zugewiesen wird; und
die Zugriffskomponente (704) weiter dazu konfiguriert ist, eine entsprechende Netzwerkadresse für den Datendienst des UEs gemäß dem Adresstyp auszuwählen, und gemäß der ausgewählten Netzwerkadresse auf das entsprechende Netzwerk zuzugreifen.

13. System zum Verarbeiten einer Netzwerkadresse, **dadurch gekennzeichnet, dass** es umfasst: ein Wireless Local Area Network, WLAN, und ein User Equipment, UE, wobei das WLAN die Vorrichtung nach Anspruch 8 oder 9 umfasst, das UE die Vorrichtung nach einem der Ansprüche 10 bis 12 umfasst.

## Revendications

1. Procédé de traitement d'une adresse réseau, comprenant :
l'acquisition, par un réseau d'accès de réseau local sans fil, WLAN, de confiance, d'une politique d'acheminement de flux d'un équipement d'utilisateur, UE (S402) ;
l'allocation, par le réseau d'accès WLAN de confiance, d'au moins une adresse réseau pour l'UE selon la politique d'acheminement de flux de l'UE (S404) ;
**caractérisé en ce que**
dans le cas où la politique d'acheminement de flux de l'UE est vide, l'allocation, par le réseau d'accès WLAN de confiance, de l'au moins une adresse réseau pour l'UE selon la politique d'acheminement de flux de l'UE (S404) comprend : l'allocation, par le réseau d'accès WLAN de confiance, d'une adresse IP et/ou d'un préfixe d'adresse IP depuis un coeur de paquet évolué, EPC, ainsi que d'une adresse IP locale et/ou d'un préfixe d'adresse IP du réseau d'accès WLAN de confiance pour l'UE.

2. Procédé selon la revendication 1, **caractérisé en ce que** la politique d'acheminement de flux de l'UE comprend au moins l'un de ce qui suit : un service de données de l'UE peut uniquement permettre un accès via l'EPC ; le service de données de l'UE peut uniquement être déchargé via le réseau d'accès WLAN de confiance ; le service de données de l'UE permet un accès via l'EPC et est déchargé via le réseau d'accès WLAN de confiance ; et la politique d'acheminement de flux de l'UE est vide.

3. Procédé selon la revendication 2, **caractérisé en ce que** l'allocation, par le réseau d'accès WLAN de confiance, de l'au moins une adresse réseau pour l'UE selon la politique d'acheminement de flux de l'UE (S404) comprend au moins l'une de ce qui suit :
dans le cas où la politique d'acheminement de flux de l'UE consiste à ce que le service de données de l'UE peut uniquement permettre l'accès via l'EPC, l'allocation, par le réseau d'accès WLAN de confiance, d'une adresse IP et/ou d'un préfixe d'adresse IP depuis l'EPC pour l'UE ;
dans le cas où la politique d'acheminement de flux de l'UE consiste à ce que le service de données de l'UE peut uniquement être déchargé via le réseau d'accès WLAN de confiance, l'allocation, par le réseau d'accès WLAN de confiance, d'une adresse IP locale et/ou d'un préfixe d'adresse IP du réseau d'accès WLAN de confiance pour l'UE ;
dans le cas où la politique d'acheminement de flux de l'UE consiste à ce que le service de données de l'UE permet l'accès via l'EPC et est déchargé via le réseau d'accès WLAN de confiance, l'allocation, par le réseau d'accès WLAN de confiance, de l'adresse IP et/ou du préfixe d'adresse IP depuis l'EPC ainsi que de l'adresse IP locale et/ou du préfixe d'adresse IP du réseau d'accès WLAN de confiance pour l'UE.

4. Procédé de traitement d'une adresse réseau comprenant
la réception, par un équipement d'utilisateur, UE, d'au moins une adresse réseau allouée par un réseau d'accès de réseau local sans fil, WLAN, de confiance pour l'UE selon une politique d'acheminement de flux de l'UE (S502) ; et
l'accès, par l'UE, à un réseau correspondant selon l'au moins une adresse réseau (S504) ;
**caractérisé par**
dans le cas où la politique d'acheminement de flux de l'UE est vide, la réception, par l'UE, d'une adresse IP et/ou d'un préfixe d'adresse IP depuis un coeur évolué de paquets, EPC, ainsi que d'une adresse IP locale et/ou d'un préfixe d'adresse IP du réseau d'accès WLAN de confiance qui sont alloués par le réseau d'accès WLAN de confiance pour l'UE.

5. Procédé selon la revendication 4, **caractérisé en ce que** la politique d'acheminement de flux de l'UE comprend au moins l'un de ce qui suit : un service de données de l'UE peut uniquement permettre un accès via l'EPC ; le service de données de l'UE peut uniquement être déchargé via le réseau d'accès WLAN de confiance ; le service de données de l'UE permet un accès via l'EPC et est déchargé via le réseau d'accès WLAN de confiance ; et la politique d'acheminement de flux de l'UE est vide.

6. Procédé selon la revendication 5, **caractérisé en ce que** la réception, par l'UE, de l'au moins une adresse réseau allouée par le réseau d'accès WLAN de confiance pour l'UE selon la politique d'acheminement de flux de l'UE (S502) comprend en outre :
dans le cas où la politique d'acheminement de flux de l'UE consiste à ce que le service de données de l'UE peut uniquement permettre l'accès via l'EPC, la réception, par l'UE, d'une adresse IP et/ou d'un préfixe d'adresse IP depuis l'EPC qui est/sont alloué(e)(s) par le réseau d'accès WLAN de confiance pour l'UE ;
dans le cas où la politique d'acheminement de flux de l'UE consiste à ce que le service de données de l'UE peut uniquement être déchargé via le réseau d'accès WLAN de confiance, la réception, par l'UE, d'une adresse IP locale et/ou d'un préfixe d'adresse IP du réseau d'accès WLAN de confiance qui est/sont alloué(e)(s) par le réseau d'accès WLAN de confiance pour l'UE ;
dans le cas où la politique d'acheminement de flux de l'UE consiste à ce que le service de données de l'UE permet l'accès via l'EPC et est déchargé via le réseau d'accès WLAN de confiance, la réception, par l'UE, de l'adresse IP et/ou du préfixe d'adresse IP depuis l'EPC et de l'adresse IP locale et/ou du préfixe d'adresse IP du réseau d'accès WLAN de confiance qui sont alloués par le réseau d'accès WLAN de confiance pour l'UE.

7. Procédé selon la revendication 6, **caractérisé en ce que**, dans le cas où la politique d'acheminement de flux de l'UE consiste à ce que le service de données de l'UE permet l'accès via l'EPC et est déchargé via le réseau d'accès WLAN de confiance, ou dans le cas où la politique d'acheminement de flux de l'UE est vide, l'accès, par l'UE, au réseau correspondant selon l'au moins une adresse réseau (S504) comprend :
l'envoi, par l'UE, d'une demande de type d'adresse à une fonction de découverte et de sélection de réseau d'accès, ANDSF, dans lequel la demande de type d'adresse transporte l'au moins une adresse réseau ;
la réception, par l'UE, d'un type d'adresse en tant que réponse de la ANDSF à la demande de type d'adresse, dans lequel le type d'adresse représente que l'au moins une adresse réseau est allouée par le réseau d'accès WLAN de confiance et/ou allouée par l'EPC ; et
la sélection, par l'UE, de l'adresse réseau correspondante pour un service de données de l'UE selon le type d'adresse, et l'accès au réseau correspondant selon l'adresse réseau sélectionnée.

8. Dispositif de traitement d'une adresse réseau, comprenant :
un composant d'acquisition (602) configuré pour acquérir une politique d'acheminement de flux d'un équipement d'utilisateur (UE) ; et
un composant d'allocation (604) configuré pour allouer au moins une adresse réseau pour l'UE selon la politique d'acheminement de flux de l'UE ;
**caractérisé en ce que**
dans un cas où la politique d'acheminement de flux de l'UE est vide, le composant d'allocation (604) est configuré pour allouer une adresse IP et/ou un préfixe d'adresse IP depuis un coeur de paquet évolué, EPC, et une adresse IP locale et/ou un préfixe d'adresse IP du réseau d'accès WLAN de confiance qui sont alloués pour l'UE.

9. Dispositif selon la revendication 8, **caractérisé en ce que** le composant d'allocation (604) est en outre configuré pour être au moins l'un de ce qui suit :
dans le cas où la politique d'acheminement de flux de l'UE consiste à ce qu'un service de données de l'UE peut uniquement permettre un accès via l'EPC, le composant d'allocation (604) est configuré pour allouer une adresse IP et/ou un préfixe d'adresse IP depuis l'EPC pour l'UE ;
dans le cas où la politique d'acheminement de flux de l'UE consiste à ce que le service de données de l'UE peut uniquement être déchargé via le réseau d'accès WLAN de confiance, le composant d'allocation (604) est configuré pour allouer une adresse IP locale et/ou un préfixe d'adresse IP du réseau d'accès WLAN de confiance pour l'UE ;
dans le cas où la politique d'acheminement de flux de l'UE consiste à ce que le service de données de l'UE permet un accès via l'EPC et est déchargé via le réseau d'accès WLAN de confiance, le composant d'allocation (604) est configuré pour allouer l'adresse IP et/ou le préfixe d'adresse IP depuis l'EPC ainsi que l'adresse IP locale et/ou le préfixe d'adresse IP du réseau d'accès WLAN de confiance pour l'UE.

10. Dispositif de traitement d'une adresse réseau, comprenant :
un composant de réception (702) configuré pour recevoir au moins une adresse réseau allouée par un réseau d'accès de réseau local sans fil, WLAN, de confiance, pour l'UE selon une politique d'acheminement de flux de l'UE ; et
un composant d'accès (704) configuré pour accéder à un réseau correspondant selon l'au moins une adresse réseau ;
**caractérisé en ce que**
dans le cas où la politique d'acheminement de flux de l'UE est vide, le composant de réception (702) est configuré pour recevoir une adresse IP et/ou un préfixe d'adresse IP d'un coeur évolué de paquets, EPC, et une adresse IP locale et/ou un préfixe d'adresse IP du réseau d'accès WLAN de confiance qui sont alloués par le réseau d'accès WLAN de confiance pour l'UE.

11. Dispositif selon la revendication 10, **caractérisé en ce que** le composant de réception (702) est en outre configuré pour être au moins l'un de ce qui suit :
dans le cas où la politique d'acheminement de flux de l'UE consiste à ce que le service de données de l'UE peut uniquement permettre un accès via l'EPC, le composant de réception (702) est configuré pour recevoir une adresse IP et/ou un préfixe d'adresse IP depuis l'EPC qui est alloué par le réseau d'accès WLAN de confiance pour l'UE ;
dans le cas où la politique d'acheminement de flux de l'UE consiste à ce que le service de données de l'UE peut uniquement être déchargé via le réseau d'accès WLAN de confiance, le composant de réception (702) est configuré pour recevoir une adresse IP locale et/ou un préfixe d'adresse IP du réseau d'accès WLAN de confiance qui est/sont alloué(e)(s) par le réseau d'accès WLAN de confiance pour l'UE ;
dans le cas où la politique d'acheminement de flux de l'UE consiste à ce que le service de données de l'UE permet l'accès via l'EPC et déchargé via le réseau d'accès WLAN de confiance, le composant de réception (702) est configuré pour recevoir l'adresse IP et/ou le préfixe d'adresse IP depuis l'EPC et l'adresse IP locale et/ou le préfixe d'adresse IP du réseau d'accès WLAN de confiance qui sont alloués par le réseau d'accès WLAN de confiance pour l'UE.

12. Dispositif selon la revendication 11, **caractérisé en ce que**, dans le cas où la politique d'acheminement de flux de l'UE consiste à ce que le service de données de l'UE permet l'accès via l'EPC et est déchargé via le réseau d'accès WLAN de confiance, ou dans le cas où la politique d'acheminement de flux de l'UE est vide,
le dispositif comprend en outre un composant d'envoi (706) configuré pour envoyer une demande de type d'adresse à une fonction de découverte et de sélection de réseau d'accès, ANDSF, dans lequel la demande de type d'adresse transporte l'au moins une adresse réseau ;
le composant de réception (702) est en outre configuré pour recevoir un type d'adresse en tant que réponse de la ANDSF à la demande de type d'adresse, dans lequel le type d'adresse représente que l'au moins une adresse réseau est allouée par le réseau d'accès WLAN de confiance et/ou allouée par l'EPC ; et
le composant d'accès (704) est en outre configuré pour sélectionner une adresse réseau correspondante pour le service de données de l'UE selon le type d'adresse, et pour accéder au réseau correspondant selon l'adresse réseau sélectionnée.

13. Système pour traiter une adresse de réseau, **caractérisé en ce qu'**il comprend : un réseau local sans fil, WLAN, et un équipement d'utilisateur, UE, dans lequel le WLAN comprend le dispositif tel que revendiqué dans la revendication 8 ou 9, l'UE comprend le dispositif tel que revendiqué dans l'une quelconque des revendications 10 à 12.
